# EUROPEAN PATENT SPECIFICATION

(11) **EP 3 131 179 B1**
(45) Date of publication and mention of the grant of the patent: **08.05.2019**
(21) Application number: 15769939.8
(22) Date of filing: 11.03.2015
(51) Int. Cl.: H02J 50/00, H02J 7/00, H02J 7/02, H02J 50/12, H02J 50/90, H02J 50/60

(54) **MOBILE TERMINAL CHARGING DEVICE AND VEHICLE MOUNTED WITH SAME**
LADEVORRICHTUNG FÜR MOBILES ENDGERÄT UND DAMIT AUSGESTATTETES FAHRZEUG
DISPOSITIF DE CHARGE DE TERMINAL MOBILE ET VÉHICULE ÉQUIPÉ DE CELUI-CI

(30) Priority: 24.03.2014 JP 2014059570
(43) Date of publication of application: 15.02.2017
(73) Proprietor: Panasonic Intellectual Property Management Co., Ltd., Osaka-shi, Osaka 570-6207 (JP)
(72) Inventor: YAMANISHI, Yuto, Osaka-shi, Osaka 640-6207 (JP); HATAKEYAMA, Ken, Osaka-shi, Osaka 540-6207 (JP); IWABUCHI, Osamu, Osaka, Osaka-shi 540-6207 (JP)
(74) Representative: SSM Sandmair
(86) International application number: PCT/JP2015/001332
(87) International publication number: WO 2015/146030

(56) References cited:
- EP-A1- 3 065 262
- EP-A1- 3 121 924
- JP-A- 2009 247 194
- JP-A- 2013 192 391
- JP-A- 2013 240 235
- US-A1- 2009 278 505

## Description

### TECHNICAL FIELD

The present invention relates to a mobile terminal charging device used to charge a mobile terminal such as a mobile phone, and a vehicle mounted with the same.

### BACKGROUND ART

Functions of a mobile terminal such as a mobile phone have been considerably advanced, and thus power consumption thereof has also been increased.

Therefore, charging the mobile terminal is required to be performed at any locations including the inside of a vehicle. And, as a trend in recent years, a mobile terminal charging device which can perform so-called noncontact charging has attracted attention.

In other words, the mobile terminal charging device includes a support plate whose surface side serves as a mobile terminal placement portion, and a charging coil provided to oppose a rear surface side of the support plate. If a mobile terminal is placed on the mobile terminal placement portion, the mobile terminal can be charged by using magnetic fluxes from the charging coil (for example, the following PTLs 1 and 2 disclose techniques similar thereto).

EP 3 065 262 A1 is a patent document according to Article 54(3) EPC and relates to a mobile-terminal charging device. In the mobile-terminal charging device, a controller performs a safety operation in a case where a resonance frequency detected by a foreign object detection coil corresponding to a location where a charging coil is present is higher than a reference resonance frequency stored in a memory, or a resonance voltage detected by a foreign object detection coil corresponding to a location where the charging coil is present is lower than a reference resonance voltage stored in the memory.

EP 3 121 924 A1 is a patent document according to Article 54(3) EPC and relates to a charging coil of a portable terminal charging apparatus. The charging coil of a portable terminal charging apparatus is provided with a first detection coil, and a second detection coil disposed inward of the first detection coil and having a smaller diameter than a diameter of the first detection coil. The first and second detection coils are connected to a controller. If the ratio of a second voltage detected by the second detection coil to a first voltage detected by the first detection coil is less than a first set value held in a memory between starting of conduction of the charging coil and connection of a charging load of the portable terminal, the controller performs a safety operation.

US 2009/278505 A1 relates to a battery-containing unit and a charging base. The battery-containing unit and charging base are a battery-containing unit includes a lithium ion battery, and a charging base to which the battery-containing unit to be charged is placed. The battery-containing unit includes a charging circuit that converts an alternating current produced in an energized coil into a direct current, and a transmitter that detects the voltage of the lithium ion battery and transmits a voltage signal to the charging base. The charging base includes a receiver that receives the signal from the transmitter and detects the voltage signal, and a high frequency power supply that provides AC power to the energizing coil The power supply of the charging base detects the voltage of the lithium ion battery through the receiver and the transmitter, and is controlled to charge the lithium ion battery so that the voltage of lithium ion battery does not exceed a predetermined voltage.

### Citation List

### Patent Literature

PTL 1: Japanese Patent Unexamined Publication No. 2012-16125
PTL 2: Japanese Patent Unexamined Publication No. 2009-247194
PTL 3: EP 3 065 262 A1
PTL 4: EP 3 121 924 A1
PTL 5: US 2009/278505 A1

### SUMMARY OF THE INVENTION

The invention is defined by the subject-matter of independent claim 1. The dependent claims are directed to advantageous embodiments.

### ADVANTAGES OF THE INVENTION

Advantageously, it is provided a mobile terminal charging device which is convenient to use.

Such a mobile terminal charging device according to the invention is defined in claim 1.

With this configuration, the mobile terminal charging device of the present invention is convenient to use.

With the above-described configuration, it is possible to reliably detect a foreign object even in a case where mobile terminals of different models are charged. As a result, various types of mobile terminals can be charged, and thus convenience is improved.

Advantageously, the controller alternately performs an operation of detecting a foreign object by driving some of the plurality of foreign object detection coils and then an operation of detecting a location where the charging coil is present by driving the plurality of position detection coils, in a state before conduction of the charging coil. Thus, in a case where a mobile terminal is placed on the mobile terminal placement portion, it is possible to start conduction of the charging coil within a shorter period of time. Also from this point, convenience is improved.

After conduction of the charging coil, it is possible to detect a foreign object by using the large diameter first detection coil and the small diameter second detection coil provided in the charging coil. On the other hand, before conduction for charging, it is possible to simply detect a foreign object by driving some of the plurality of foreign object detection coils. Therefore, it is possible to reduce time required to detect a foreign object before starting conduction, and, accordingly, it is also possible to reduce time required to start charging using the charging coil. Also from this point, convenience is improved.

Although a foreign object is simply detected by driving some of the plurality of foreign object detection coils, the mobile terminal placement portion is not so large, and thus a foreign object can be frequently detected unless a distance from currently driven foreign object detection coils to the foreign object is long. Therefore, there is a high probability that a foreign object may be detected even in this simple foreign object detection.

Even if a foreign object cannot be detected according to the simple detection method, a foreign object can be reliably detected by using the above-described large diameter first detection coil and small diameter second detection coil provided in the charging coil after conduction. Thus, the safety is high.

### BRIEF DESCRIPTION OF DRAWINGS

FIG. 1 is a perspective view illustrating a state in which a mobile terminal charging device according to an exemplary embodiment of the present invention is provided inside a vehicle.
FIG. 2 is a perspective view illustrating the mobile terminal charging device according to the exemplary embodiment of the present invention.
FIG. 3 is a perspective view of the mobile terminal charging device illustrated in FIG. 2.
FIG. 4 is a perspective view illustrating a state in which a part of the mobile terminal charging device illustrated in FIG. 2 is omitted.
FIG. 5 is a plan view illustrating the mobile terminal charging device in the state illustrated in FIG. 4.
FIG. 6 is a sectional view taken along a dashed line S-S' in the mobile terminal charging device illustrated in FIG. 2.
FIG. 7 is a perspective view illustrating another state of the mobile terminal charging device illustrated in FIG. 4.
FIG. 8 is a plan view illustrating the mobile terminal charging device in the state illustrated in FIG. 7.
FIG. 9 is a control block diagram of the mobile terminal charging device illustrated in FIG. 2.
FIG. 10 is a sectional view illustrating a configuration of a support plate of the mobile terminal charging device illustrated in FIG. 2.
FIG. 11 is a plan view illustrating a configuration of the support plate of the mobile terminal charging device illustrated in FIG. 2.
FIG. 12 is a perspective view illustrating a detection coil of the mobile terminal charging device illustrated in FIG. 2.
FIG. 13 is a plan view of the detection coil of the mobile terminal charging device illustrated in FIG. 2.
FIG. 14 is a diagram illustrating an operation of the mobile terminal charging device illustrated in FIG. 2.
FIG. 15 is a diagram illustrating an operation of the mobile terminal charging device illustrated in FIG. 2.
FIG. 16 is a diagram illustrating an operation of the mobile terminal charging device illustrated in FIG. 2.
FIG. 17 is a diagram illustrating an operation of the mobile terminal charging device illustrated in FIG. 2.
FIG. 18 is a diagram illustrating an operation of the mobile terminal charging device illustrated in FIG. 2.
FIG. 19 is a flowchart illustrating an operation of the mobile terminal charging device illustrated in FIG. 2.
FIG. 20 is a diagram illustrating a relationship between a location where a charging coil is present and a resonance frequency of a foreign object detection coil.
FIG. 21 is a diagram illustrating a relationship between a location where the charging coil is present and a resonance voltage of the foreign object detection coil.
FIG. 22 is a diagram illustrating a resonance frequency of the foreign object detection coil in a case where a metal foreign object is present.
FIG. 23 is a diagram illustrating a resonance voltage of the foreign object detection coil in a case where a metal foreign object is present.
FIG. 24 is a diagram illustrating an operation of the mobile terminal charging device illustrated in FIG. 2.
FIG. 25 is a diagram illustrating an operation of the mobile terminal charging device illustrated in FIG. 2.

### DESCRIPTION OF EMBODIMENT

Prior to description of an exemplary embodiment of the present invention, problems of the above-described example of the related art will be described. In the example of the related art, in a case where, for example, a metal foreign object such as a coin is placed on the mobile terminal placement portion of the support plate, and a mobile terminal is further placed thereon, the metal foreign object is detected by foreign object detection means, and, for example, conduction of the charging coil is blocked.

Therefore, it is possible to prevent the temperature of the foreign object from increasing due to magnetic fluxes from the charging coil.

However, in the example of the related art, the foreign object detection means is formed of a plurality of metal detection antenna coils and an oscillation circuit connected to each of the metal detection antenna coils, and detects a foreign object by detecting an oscillation frequency of each metal detection antenna coil. Thus, the foreign object detection means is not preferable in terms of versatility.

In other words, in the example of the related art, if there is a metal foreign object, the foreign object is detected by using a change in an oscillation state of the oscillation circuit. In such a configuration, the oscillation circuit is extremely delicately set, and thus the configuration is useful for charging a mobile terminal whose characteristics are known in advance. However, in a case where a mobile terminal whose characteristics are not known is charged, an oscillation state is changed by the mobile terminal, and, as a result, there is a mobile terminal which cannot be charged, and thus the configuration is not preferable in terms of versatility.

For example, in a case where the mobile terminal charging device is provided in a passenger compartment of a vehicle an unspecified large number of people frequently try to charge various types of mobile terminals. In this state, mobile terminals cannot be charged depending on models of the mobile terminals, and thus the mobile terminal charging device is inconvenient.

In this example of the related art, a foreign object is detected in the entire region of the mobile terminal placement portion by the foreign object detection means using a plurality of metal detection antenna coils, and the charging coil is conducted. Therefore, in foreign object detection using the metal detection antenna coil, an oscillation state change of the oscillation circuit is detected. Thus, it takes a long time for each metal detection antenna coil to perform detection. In other words, the charging coil cannot be conducted unless a foreign object can be detected by using all of the metal detection antenna coils. Therefore, it takes a long time for the charging coil to start charging. Also for this reason, the mobile terminal charging device is inconvenient.

Hereinafter, with reference to the accompanying drawings, a description will be made of an example in which a mobile terminal charging device according to an exemplary embodiment of the present invention is equipped in a vehicle.

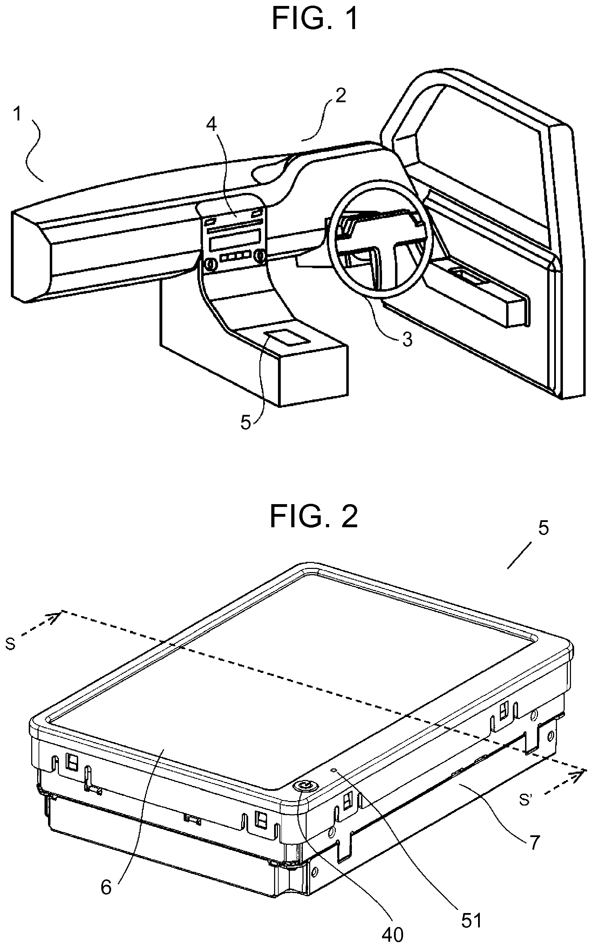

In FIG. 1, steering wheel 3 is provided on the front side in passenger compartment 2 of vehicle 1.

Electronic apparatus 4 which reproduces music or videos and displays car navigation images and the like is provided on the lateral side of steering wheel 3.

Mobile terminal charging device 5 is provided on the rear side of electronic apparatus 4 in passenger compartment 2.

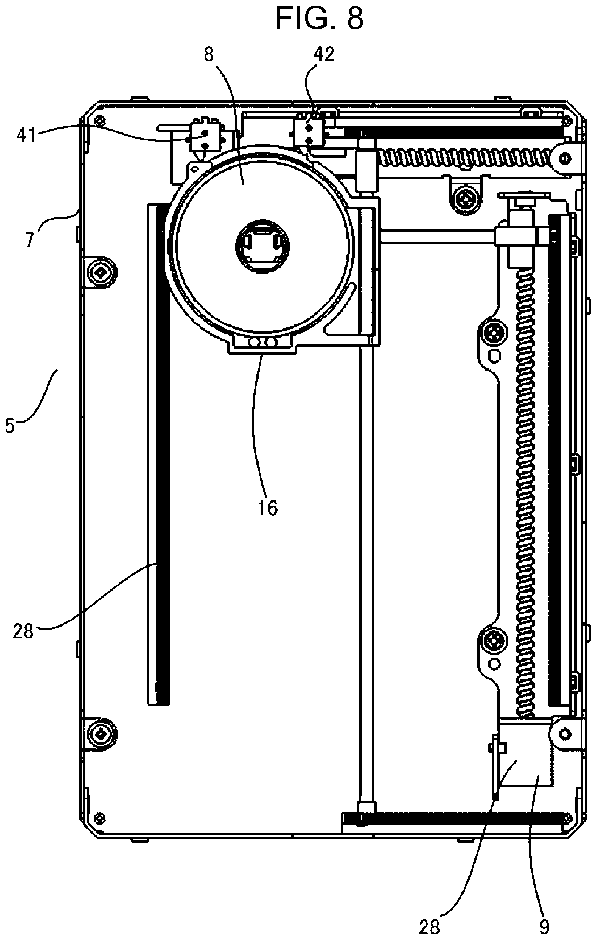

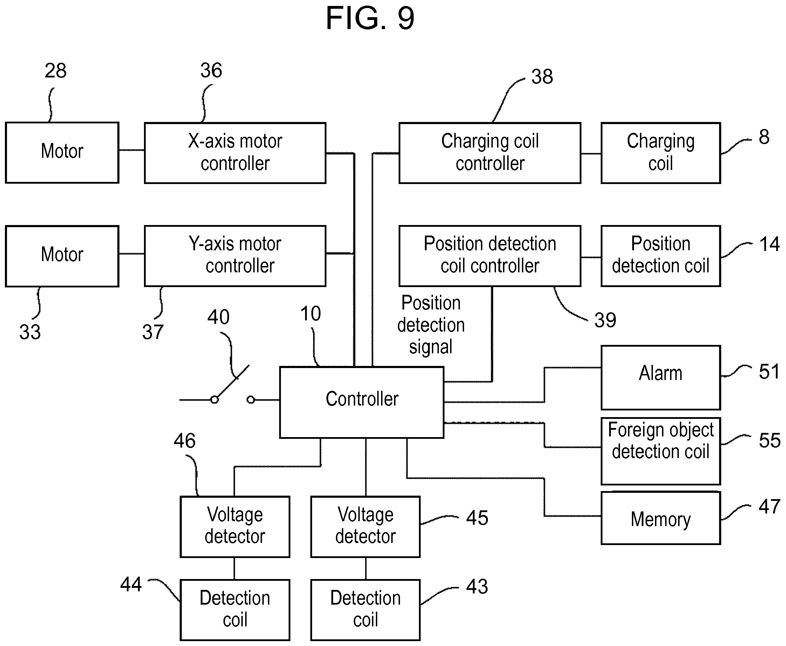

Mobile terminal charging device 5 includes, as illustrated in FIGS. 2 to 8, box-shaped main body case 7 in which support plate 6 is disposed on an upper surface thereof; charging coil 8 provided to be movable in a horizontal direction in a state of opposing a lower surface side of support plate 6 in the main body case 7; driver 9 which causes charging coil 8 to be moved in the horizontal direction so as to oppose the lower surface side of support plate 6; and a controller (the reference numeral 10 in FIG. 9) connected to driver 9 and charging coil 8.

Hereinafter, each constituent element will be described in detail.

First, support plate 6 will be described.

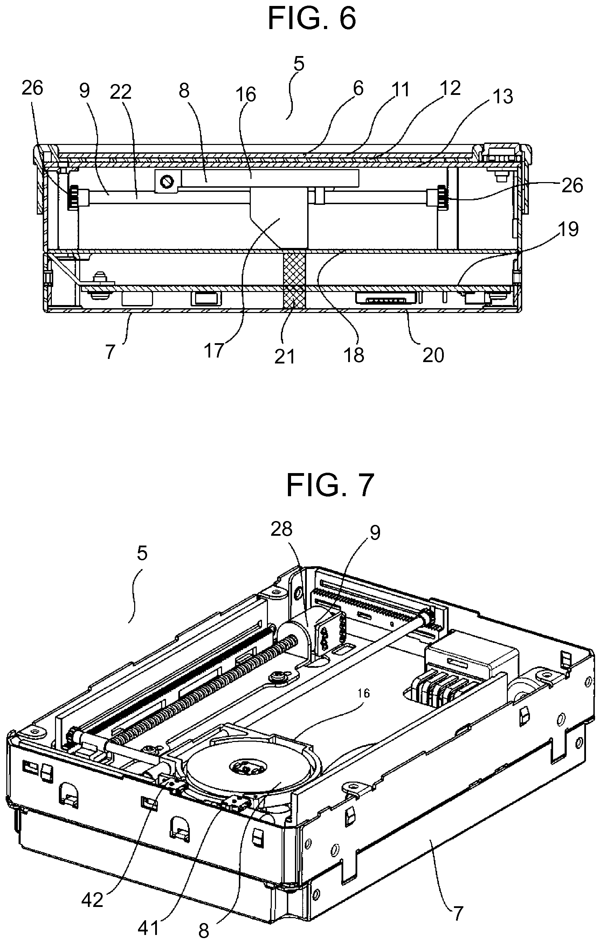

As illustrated in FIG. 6, support plate 6 has a configuration in which front surface plate 11, intermediate plate 12, and rear surface plate 13 overlap each other.

Front surface plate 11 and rear surface plate 13 are made of synthetic resin, and intermediate plate 12 is made of ceramics. In other words, a magnetic flux from charging coil 8 can pass through support plate 6 toward mobile terminal 15.

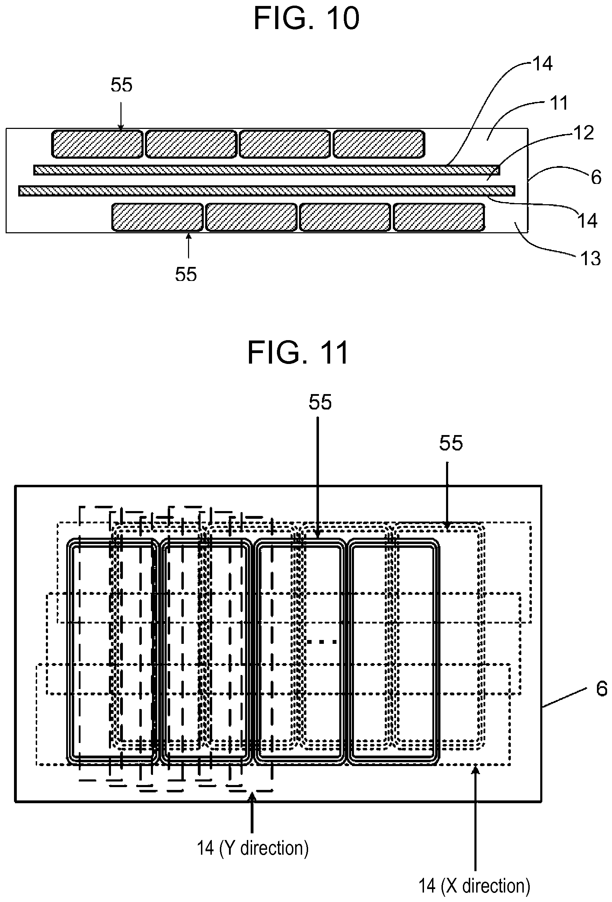

Position detection coils 14 (an example of a charging coil position detector) illustrated in FIGS. 10 and 11 are provided in the Y direction and the X direction on front and rear surfaces of intermediate plate 12. Position detection coils 14 are provided in a state in which ten or more position detection coils (Y1, Y2, Y3, Y4, Y5, Y6,...) extending in the Y direction and three position detection coils (X1, X2, and X3) extending in the X direction, as understood from FIG. 11, intersect each other with a predetermined gap in the Y direction and the X direction on the upper and lower sides of intermediate plate 12 of support plate 6, as understood from FIG. 10.

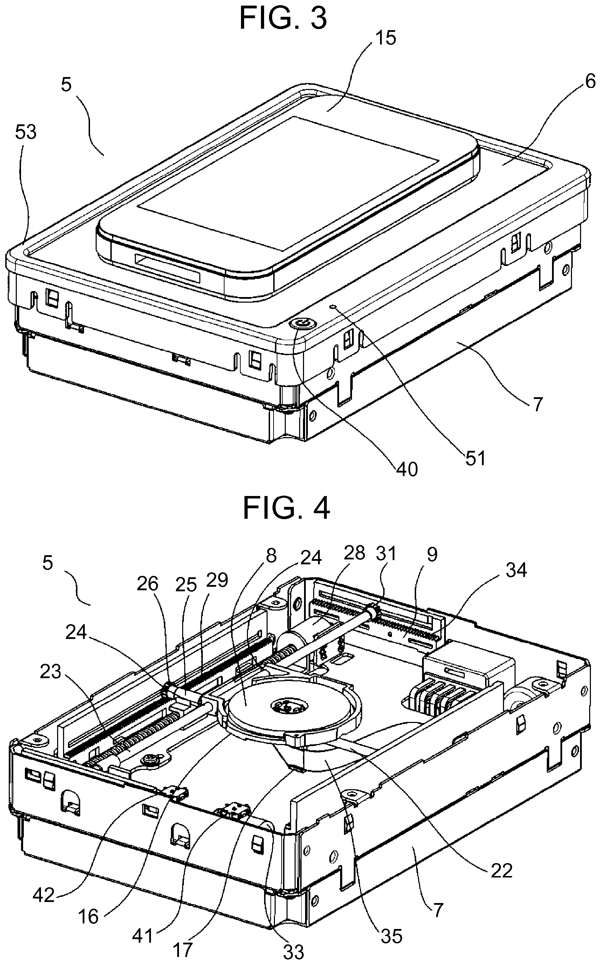

Position detection coils 14 are also used in, for example, PTL 2, and detects at which position mobile terminal 15 is placed on the mobile terminal placement portion which is the upper surface of support plate 6 as illustrated in FIG. 3.

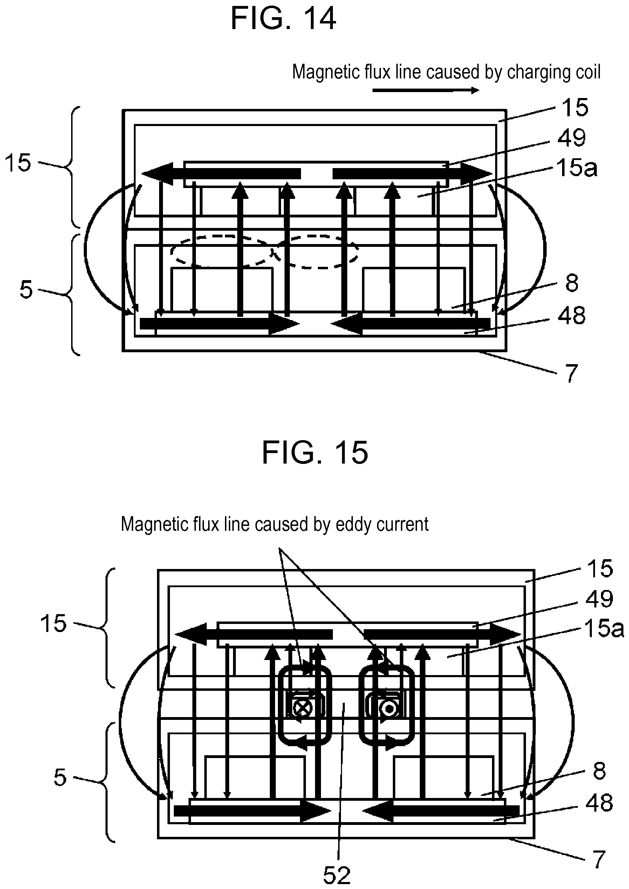

In the present exemplary embodiment, position detection coils 14 detect at which position mobile terminal 15 is placed on the upper surface of support plate 6 as illustrated in FIG. 3. Next, driver 9 moves charging coil 8 to a position opposing a terminal charging coil (the reference numeral 15a in FIG. 14) of mobile terminal 15, and then conduction of charging coil 8 is performed.

As understood from FIGS. 10 and 11, four foreign object detection coils 55 (L1, L2, L3, and L4) extending in the Y direction are disposed in a state of being close to each other on a front surface side (upper surface side) of front surface plate 11. Four foreign object detection coils 55 (L5, L6, L7, and L8) are further disposed in a state of being close to each other in the Y direction on a rear surface side (lower surface side) of rear surface plate 13.

In the present exemplary embodiment, it is detected whether or not there is a foreign object on the front surface (upper surface side) of front surface plate 11 during non-conduction of charging coil 8 (before conduction of charging coil 8), by subjecting foreign object detection coils 55 to division driving (L1 and L2 are driven, L3 and L4 are driven, L5 and L6 are driven, and L7 and L8 are driven). This will be described in detail in the following description of an operation thereof.

Next, charging coil 8 will be described.

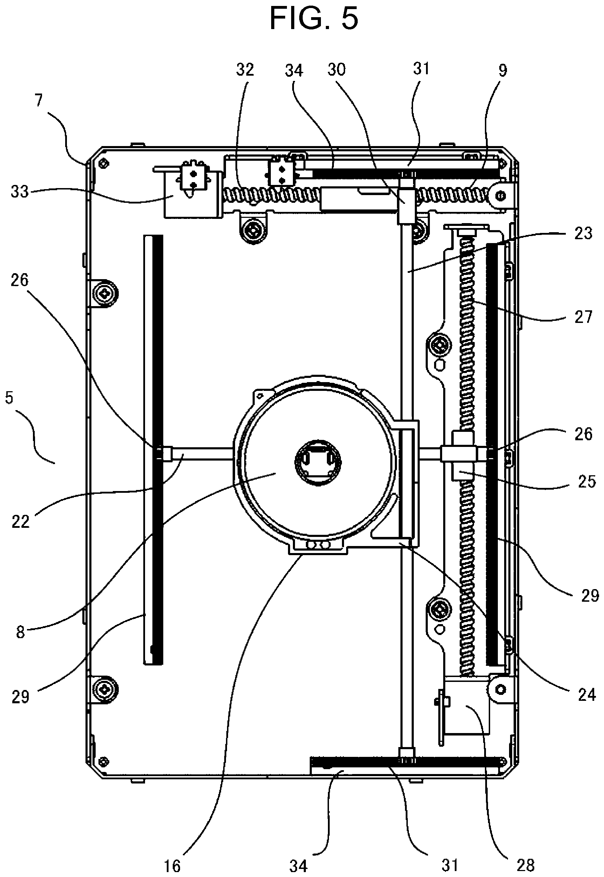

As illustrated in FIGS. 4 and 5, charging coil 8 has a ring shape formed by winding a wiring material in a spiral shape. An outer peripheral side and a lower surface side of the charging coil are held in a state of being covered with holding member 16 made of synthetic resin.

Support leg 17 extending toward a lower side of charging coil 8 is integrally formed with holding member 16 on its lower surface by using synthetic resin as illustrated in FIG. 6.

A gap of 0.3 millimeters is provided between a lower surface of support leg 17 and an upper surface of metallic support plate 18 disposed under support leg 17. Therefore, in a normal state, the lower surface of support leg 17 is not in contact with the upper surface of support plate 18 during movement of charging coil 8.

Control board 19 and a lower plate 20 of main body case 7 are disposed under support plate 18. Support member 21 penetrating through control board 19 is provided between a lower surface of support plate 18 and an upper surface of lower plate 20. In other words, in the present exemplary embodiment, the lower surface side of support plate 18 is supported by lower plate 20 of main body case 7 via support member 21 in order to increase the strength relative to excessive weight.

Next, driver 9 will be described.

As illustrated in FIGS. 4 and 5, driver 9 includes X-axis direction driving shaft 22 and Y-axis direction driving shaft 23. An intermediate portion of each of X-axis direction driving shaft 22 and Y-axis direction driving shaft 23 is engaged with holding member 16 in portions other than a portion of holding the charging coil holding member 16.

In other words, a penetration hole (not illustrated) through which X-axis direction driving shaft 22 penetrates and penetration hole 24 through which Y-axis direction driving shaft 23 penetrates are provided in holding member 16 with a predetermined gap in the vertical direction in a state of crossing each other. X-axis direction driving shaft 22 and Y-axis direction driving shaft 23 penetrate through the penetration hole so as to be engaged with each other.

Worm wheel 25 is provided at one end side of X-axis direction driving shaft 22, gear 26 is provided at one end side thereof, and gear 26 is also provided at the other end side thereof.

Worm wheel 25 is engaged with worm 27, and worm 27 is connected to motor 28.

Gears 26 on both sides are respectively engaged with gear plates 29.

Therefore, if motor 28 is driven, worm 27 is rotated, and thus worm wheel 25 is moved in the X axis direction along with X-axis direction driving shaft 22. Therefore, charging coil 8 is moved in the X axis direction.

Worm wheel 30 is provided at one end side of Y-axis direction driving shaft 23, gear 31 is provided at one end side thereof, and gear 31 is also provided at the other end side thereof.

Worm wheel 30 is engaged with worm 32, and worm 32 is connected to motor 33.

Gears 31 on both sides are respectively engaged with gear plates 34.

Therefore, if motor 33 is driven, worm 32 is rotated, and thus worm wheel 30 is moved in the Y axis direction along with Y-axis direction driving shaft 23. Therefore, charging coil 8 is moved in the Y axis direction.

The reference numeral 35 illustrated in FIG. 4 indicates a flexible wiring causing a current to flow through charging coil 8, and an end of flexible wiring 35 is fixed to the side surface of above-described support leg 17.

As illustrated in FIG. 9, controller 10 is connected to motor 28 via X-axis motor controller 36, and is connected to motor 33 via Y-axis motor controller 37.

Controller 10 is connected to charging coil 8 via charging coil controller 38, and is also connected to position detection coils 14 via position detection coil controller 39.

Next, a description will be made of a configuration of detecting whether or not there is a foreign object on the front surface side (upper surface side) of front surface plate 11 during conduction of charging coil 8.

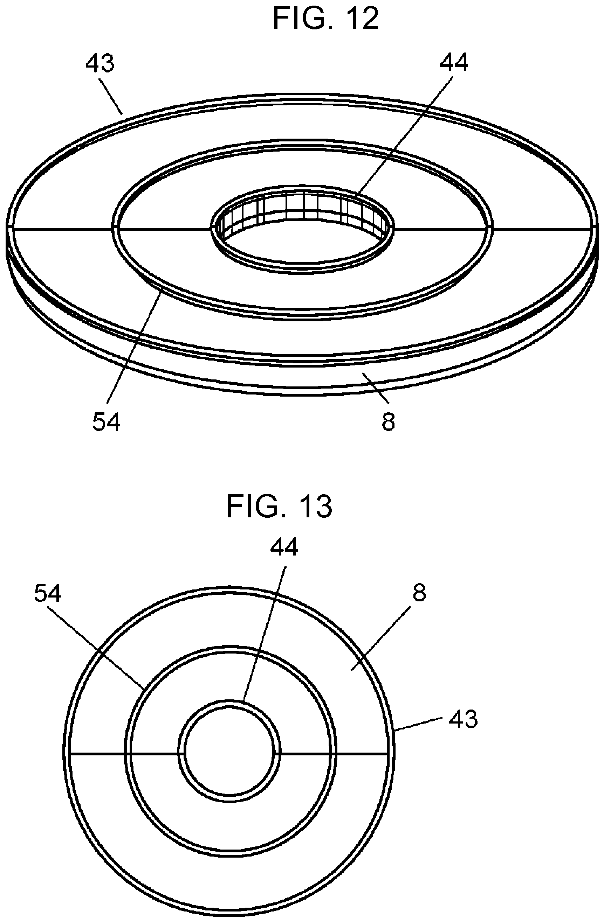

In the present exemplary embodiment, as described above, foreign object detection coils 55 detect whether or not there is a foreign object on the front surface side (upper surface side) of front surface plate 11 during non-conduction of charging coil 8 (before conduction of charging coil 8). On the other hand, during conduction of charging coil 8 (after conduction of charging coil 8), the presence of a foreign object is detected by large diameter detection coil 43 illustrated in FIGS. 12 and 13 provided between charging coil 8 and the mobile terminal placement portion of support plate 6, and detection coil 44 which is disposed inside detection coil 43. Detection coil 44 has a smaller diameter than that of detection coil 43.

Specifically, since charging coil 8 is movable depending on a location where mobile terminal 15 is placed, detection coils 43 and 44 are disposed on the upper surface of charging coil 8 (the surface on support plate 6 side), and are moved along with charging coil 8.

Large diameter detection coil 43 has nearly the same size as the outer diameter of annular charging coil 8 (the detection coil is slightly smaller than the outer diameter of charging coil 8), and small diameter detection coil 44 has nearly the same size as the inner diameter of annular charging coil 8 (the detection coil is slightly larger than the inner diameter of charging coil 8).

As illustrated in FIG. 9, large diameter detection coil 43 and small diameter detection coil 44 are connected to controller 10 via voltage detectors 45 and 46, respectively.

The reference numeral 47 illustrated in FIG. 9 indicates a memory which stores a program or the like for performing a safety operation on metal foreign objects by using large diameter detection coil 43 and small diameter detection coil 44.

In the present exemplary embodiment, if a metal foreign object is present between the mobile terminal placement portion (the upper surface of support plate 6) and mobile terminal 15, it is found that a magnetic flux in the inner portion of charging coil 8 decreases, and, conversely, a magnetic flux in the outer portion increases, and this state is detected by large diameter detection coil 43 and small diameter detection coil 44.

Hereinafter, this state will be described with reference to FIGS. 13 to 18 simplified for better understanding.

FIG. 14 illustrates a state in which mobile terminal 15 is being charged (during conduction of charging coil 8) in a state in which there is no metal foreign object between the mobile terminal placement portion (the upper surface of support plate 6) and mobile terminal 15 as in FIG. 3.

In FIGS. 13 to 18, the reference numeral 48 indicates a magnetic body for forming a magnetic path, provided on a lower side (an opposite side to mobile terminal 15) of charging coil 8 in main body case 7 of mobile terminal charging device 5. The reference numeral 49 indicates a magnetic body for forming a magnetic path, provided on an upper side (an opposite side to mobile terminal charging device 5) of terminal charging coil 15a in mobile terminal 15.

If a charging operation is performed, as illustrated in FIG. 14, a magnetic flux from charging coil 8 of mobile terminal charging device 5 is supplied to terminal charging coil 15a of mobile terminal 15. This magnetic flux induces a voltage in terminal charging coil 15a, and thus mobile terminal 15 is charged by the voltage.

The magnetic flux having passed through terminal charging coil 15a returns to charging coil 8 via magnetic body 49, a space, and magnetic body 48 as indicated by arrows.

In contrast, FIG. 15 illustrates a state in which mobile terminal 15 is being charged in a state in which non-magnetic metal foreign object 50 (for example, a coin made of aluminum) is present between the mobile terminal placement portion (the upper surface of support plate 6) and mobile terminal 15.

In this case, as illustrated in FIG. 15, an eddy current is induced in metal foreign object 50 by a magnetic flux passing through metal foreign object 50. As a result, a magnetic flux is generated as indicated by a counterclockwise arrow in FIG. 15.

The magnetic flux indicated by the counterclockwise arrow has a direction opposite to a direction of a magnetic flux directed from charging coil 8 toward terminal charging coil 15a in an inner portion of metal foreign object (the central direction of charging coil 8). The magnetic flux indicated by the counterclockwise arrow has the same direction as the direction of the magnetic flux directed from charging coil 8 toward terminal charging coil 15a in an outer portion (a direction opposite to the center of charging coil 8).

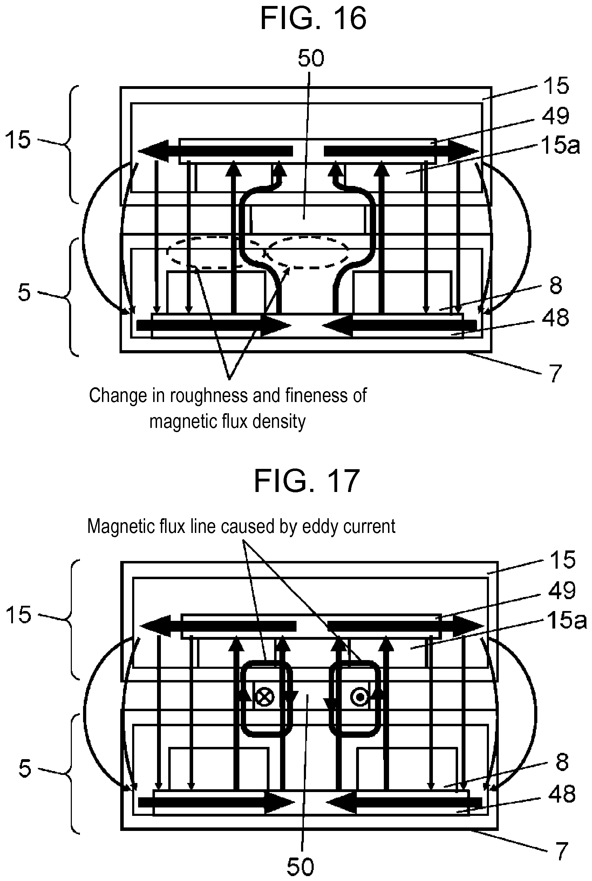

As a result, as illustrated in FIG. 16, among the magnetic fluxes directed from charging coil 8 toward terminal charging coil 15a, a magnetic flux advancing in the inner peripheral direction of charging coil 8 is curved outward from the inner peripheral portion of charging coil 8 and is then directed toward terminal charging coil 15a.

In other words, the magnetic flux in the inner peripheral portion of charging coil 8 decreases, and, conversely, the magnetic flux in the outer peripheral portion of charging coil 8 increases.

In this situation, in the present exemplary embodiment, since large diameter detection coil 43 is provided on the upper surface side (terminal charging coil 15a side) of charging coil 8 and small diameter detection coil 44 is provided inside detection coil 43 as described above, a state illustrated in FIG. 16 can be detected by detection coils 43 and 44.

Specifically, a first voltage (V1) detected by large diameter detection coil 43 increases (as a result of there being a large number of magnetic fluxes, and a distance to the magnetic fluxes also becoming short). Conversely, a second voltage (V2) detected by small diameter detection coil 44 decreases (as a result of there being a small number of magnetic fluxes, and a distance to the magnetic fluxes also becoming long).

In the present exemplary embodiment, voltage detector 45 detects a peak voltage of the first voltage (V1) detected by large diameter detection coil 43. Voltage detector 46 detects a peak voltage of the second voltage (V2) detected by small diameter detection coil 44.

Controller 10 compares the ratio (V2/V1) of the second voltage (V2) to the first voltage (V1) with a set value (which is stored in memory 47 and is, for example, 0.7), and performs a safety operation on the basis of a comparison result.

As an example, in the state (the presence of metal foreign object 50) illustrated in FIG. 16, the second voltage (V2) detected by small diameter detection coil 44 is, for example, 25% smaller than in the state (the absence of metal foreign object 50) illustrated in FIG. 14.

In contrast, in the state (the presence of metal foreign object 50) illustrated in FIG. 16, the first voltage (V1) detected by large diameter detection coil 43 is, for example, 170% larger than in the state (the absence of metal foreign object 50) illustrated in FIG. 14.

As a result, the ratio (V2/V1) of the second voltage (V2) to the first voltage (V1) is reduced by half or less (0.5 or less) in the state (the presence of metal foreign object 50) illustrated in FIG. 16 compared with the state (the absence of metal foreign object 50) illustrated in FIG. 14.

Since the detected value (0.5 or less) is sufficiently smaller than the set value (0.7) stored in memory 47, controller 10 detects the presence of metal foreign object 50 so as to instantly stop the supply of a current to charging coil 8, and operates alarm 51 illustrated in FIGS. 2 and 9.

In other words, alarm 51 is connected to controller 10 as illustrated in FIG. 9, and thus performs a notification of an abnormal state with a light when metal foreign object 50 is present.

Next, FIG. 17 illustrates a state in which mobile terminal 15 is being charged in a state in which magnetic metal foreign object 52 (for example, an iron object) is present between the mobile terminal placement portion (the upper surface of support plate 6) and mobile terminal 15.

Also in this case, as illustrated in FIG. 17, an eddy current is induced in metal foreign object 52 by a magnetic flux passing through metal foreign object 52. As a result, a magnetic flux is generated as indicated by a counterclockwise arrow in FIG. 17.

This metal foreign object 52 is a magnetic body, and magnetic fluxes advancing into metal foreign object 52 include magnetic fluxes passing therethrough and magnetic fluxes advancing thereinto, for example, outward. Therefore, FIG. 17 illustrates the additional magnetic flux caused by the eddy current unlike FIG. 15.

However, the magnetic flux which is additionally generated in this way has a counterclockwise direction in FIG. 17 and thus has a direction opposite to the direction of the magnetic flux directed from charging coil 8 toward terminal charging coil 15a in an inner portion thereof (the central direction of charging coil 8). The magnetic flux has the same direction as the direction of the magnetic flux directed from charging coil 8 toward terminal charging coil 15a in an outer portion (a direction opposite to the center of charging coil 8) of the magnetic flux indicated by the counterclockwise arrow.

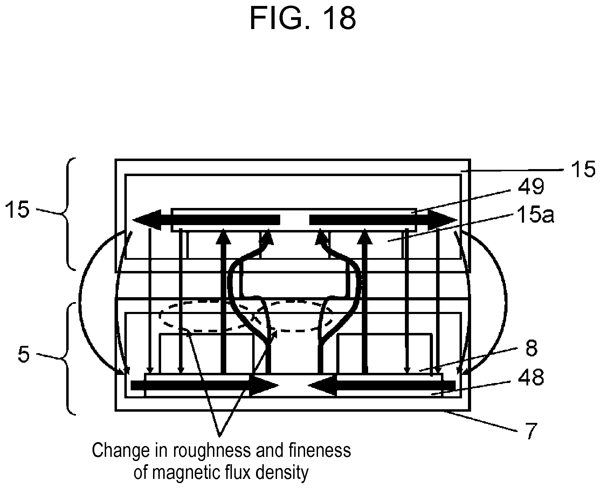

As a result, as illustrated in FIG. 18, among the magnetic fluxes directed from charging coil 8 toward terminal charging coil 15a, a magnetic flux advancing in the inner peripheral direction of charging coil 8 is curved outward from the inner peripheral portion of charging coil 8 and is then directed toward terminal charging coil 15a (some magnetic fluxes advance into metal foreign object 52 in the outer circumference thereof).

In other words, the magnetic flux in the inner peripheral portion of charging coil 8 decreases, and the magnetic flux in the outer peripheral portion of charging coil 8 increases.

This situation can be detected by large diameter detection coil 43 and small diameter detection coil 44 disposed on the upper surface side (terminal charging coil 15a side) of charging coil 8.

Specifically, the first voltage (V1) detected by large diameter detection coil 43 increases (as a result of there being a large number of magnetic fluxes, and a distance to the magnetic fluxes also becoming short), and, conversely, the second voltage (V2) detected by small diameter detection coil 44 decreases (as a result of there being a small number of magnetic fluxes, and a distance to the magnetic fluxes also becoming long).

A peak voltage of the first voltage (V1) detected by large diameter detection coil 43 is detected by voltage detector 45. A peak voltage of the second voltage (V2) detected by small diameter detection coil 44 is detected by voltage detector 46. Controller 10 compares the ratio (V2/V1) of the second voltage (V2) to the first voltage (V1) with a set value (which is stored in memory 47 and is, for example, 0.7), and performs a safety operation on the basis of a comparison result.

As an example, in the state (the presence of metal foreign object 52) illustrated in FIG. 17, the second voltage (V2) detected by small diameter detection coil 44 is, for example, 15% smaller than in the state (the absence of metal foreign object 52) illustrated in FIG. 14.

In contrast, in the state (the presence of metal foreign object 52) illustrated in FIG. 17, the first voltage (V1) detected by large diameter detection coil 43 is, for example, 170% larger than in the state (the absence of metal foreign object 52) illustrated in FIG. 14.

As a result, the ratio (V2/V1) of the second voltage (V2) to the first voltage (V1) is reduced by half or less (0.5 or less) in the state (the presence of metal foreign object 52) illustrated in FIG. 17 compared with the state (the absence of metal foreign object 52) illustrated in FIG. 14.

Since the detected value (0.5 or less) is sufficiently smaller than the set value (0.7) stored in memory 47, controller 10 detects the presence of metal foreign object 52 so as to instantly stop the supply of a current to charging coil 8, and operates alarm 51 illustrated in FIGS. 2 and 9.

In other words, controller 10 lights alarm 51 so as to perform a notification of an abnormal state.

As described above, in the present exemplary embodiment, even if either of nonmagnetic metal foreign object 50 and magnetic metal foreign object 52 is present between mobile terminal placement portion (the upper surface of support plate 6) and mobile terminal 15, it is found that a magnetic flux in the inner portion of charging coil 8 decreases, and, conversely, magnetic fluxes in other portions increase, and this state is detected by large diameter detection coil 43 and small diameter detection coil 44.

In other words, in a case where large diameter detection coil 43 detects an increase in the outer magnetic flux, the first voltage (V1) increases. If the inner magnetic flux decreases, the second voltage (V2) detected by small diameter detection coil 44 inversely decreases. Therefore, the ratio (V2/V1) between both voltages is sufficiently smaller than the set value, and, as result, it is possible to reliably detect the presence of metal foreign object 50 or 52 and to reliably perform a safety operation.

An operation of detecting metal foreign object 50 or 52 (determination based on the ratio V2/V1) is not substantially influenced by whether the metal foreign object is a magnetic body or a nonmagnetic body, or the type of charged mobile terminal 15. Therefore, the mobile terminal charging device can charge various mobile terminals 15 with versatility and is considerably convenient to use.

In the present exemplary embodiment, a description has been made of an example in which mobile terminal charging device 5 is provided in passenger compartment 2 of vehicle 1.

This is because a coin or the like is frequently placed on support plate 6 in vehicle 1.

In other words, in vehicle 1, mobile terminal 15 is deviated from the upper surface of support plate 6 due to inertia of an advancing direction or vibration during driving of the vehicle. Thus, as a countermeasure therefor, as illustrated in FIG. 3, guard portion 53 protruding upward from support plate 6 is provided at the outer circumference of support plate 6.

As a result, a state occurs in which a coin hardly falls off during driving of the vehicle, and this causes the coin to be placed on support plate 6.

Therefore, it is very useful to provide mobile terminal charging device 5 of the present exemplary embodiment in passenger compartment 2 of vehicle 1.

In the present exemplary embodiment, a description has been made of an example in which large diameter detection coil 43 and small diameter detection coil 44 are provided on the upper surface side of charging coil 8 (terminal charging coil 15a side). And, as illustrated in FIGS. 12 and 13, there may be a configuration in which intermediate diameter detection coil 54 is provided between large diameter detection coil 43 and small diameter detection coil 44 and is also connected to controller 10.

In other words, if intermediate diameter detection coil 54 is provided, switching between the detection coils 43, 44 and 54 for comparison can be performed, or situations between detection coils 43 and 54, and 54 and 44 can be detected.

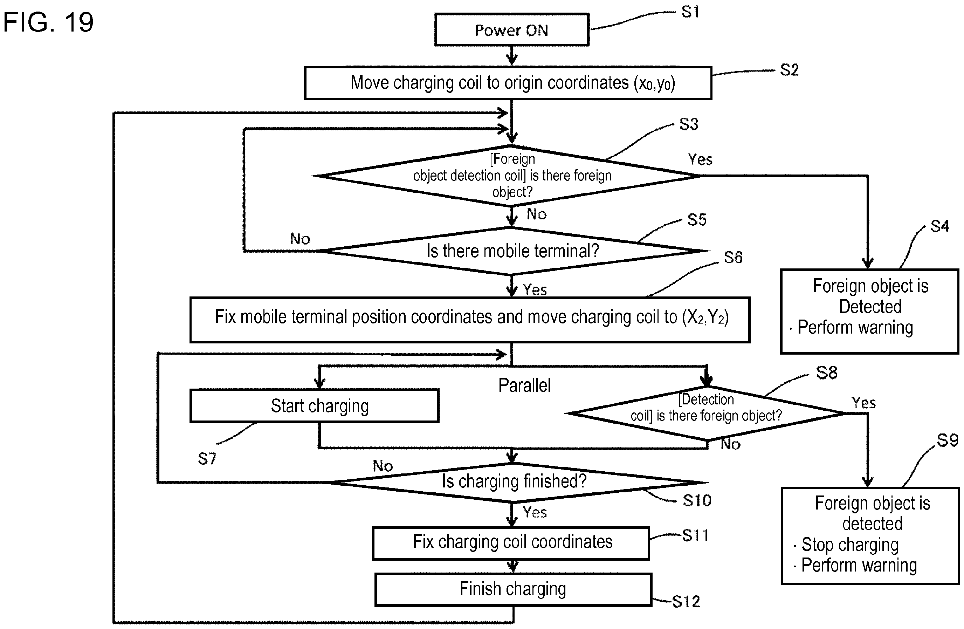

In the above-described configuration, if power switch 40 illustrated in FIGS. 2 and 9 is turned on (step S1 in FIG. 19), a position of charging coil 8 is initialized (step S2 in FIG. 19).

The position initialization indicates that charging coil 8 is returned to the corner (coordinates xo and yo) illustrated in FIG. 7 by driving motors 28 and 33.

In other words, switches 41 and 42 are present at the corner, and, if charging coil 8 is moved to the corner inside main body case 7 provided with switches 41 and 42, switches 41 and 42 are operated, and thus controller 10 determines that a position of charging coil 8 has been initialized.

Next, controller 10 supplies detection pulses to the above-described eight foreign object detection coils 55 (L1, L2, L3, L4, L5, L6, L7, and L8), respectively. In a case where a resonance frequency of each of foreign object detection coils 55 is lower than a reference resonance frequency, held in memory 47, for each location where charging coil 8 is present, or in a case where a resonance voltage detected by each foreign object detection coil 55 is higher than a reference resonance voltage, held in memory 47, for each location where charging coil 8 is present, a safety operation is performed (steps S3 and S4 in FIG. 19).

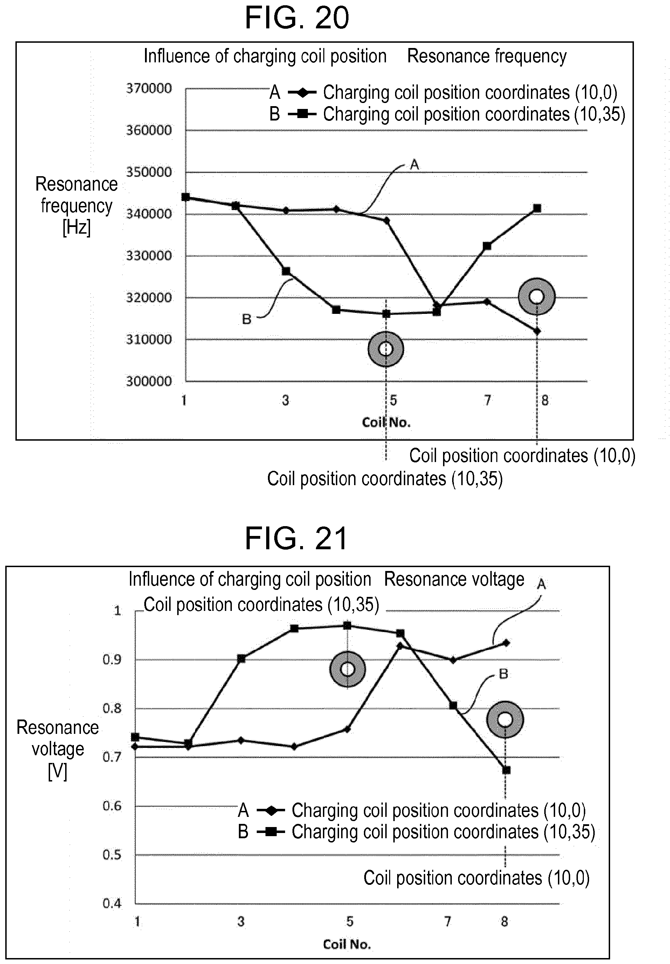

In relation to detailed description thereof, FIG. 20 illustrates a state in which a resonance frequency of corresponding foreign object detection coil 55 is influenced by a location where charging coil 8 is present.

Specifically, line A of FIG. 20 indicates resonance frequencies of respective foreign object detection coils 55 (L1, L2, L3, L4, L5, L6, L7, and L8) when charging coil 8 is present at coordinates (10,0), and indicates a situation in which resonance frequencies of foreign object detection coils 55 (L8) near charging coil 8 are lowered.

Line B of FIG. 20 indicates resonance frequencies of respective foreign object detection coils 55 (L1, L2, L3, L4, L5, L6, L7, and L8) when charging coil 8 is present at coordinates (10,35), and indicates a situation in which resonance frequencies of foreign object detection coils 55 (L5) near charging coil 8 are lowered.

Line A of FIG. 21 indicates resonance voltages of respective foreign object detection coils 55 when charging coil 8 is present at coordinates (10,0), and indicates a situation in which a resonance voltage of foreign object detection coil 55 (L8) near charging coil 8 is heightened.

Line B of FIG. 21 indicates resonance voltages of respective foreign object detection coils 55 when charging coil 8 is present at coordinates (10,35), and indicates a situation in which a resonance voltage of foreign object detection coil 55 (L5) near charging coil 8 is heightened.

In other words, it has been found that a resonance frequency of foreign object detection coil 55 near charging coil 8 is lowered, and, conversely, a resonance voltage of foreign object detection coil 55 near charging coil 8 is heightened.

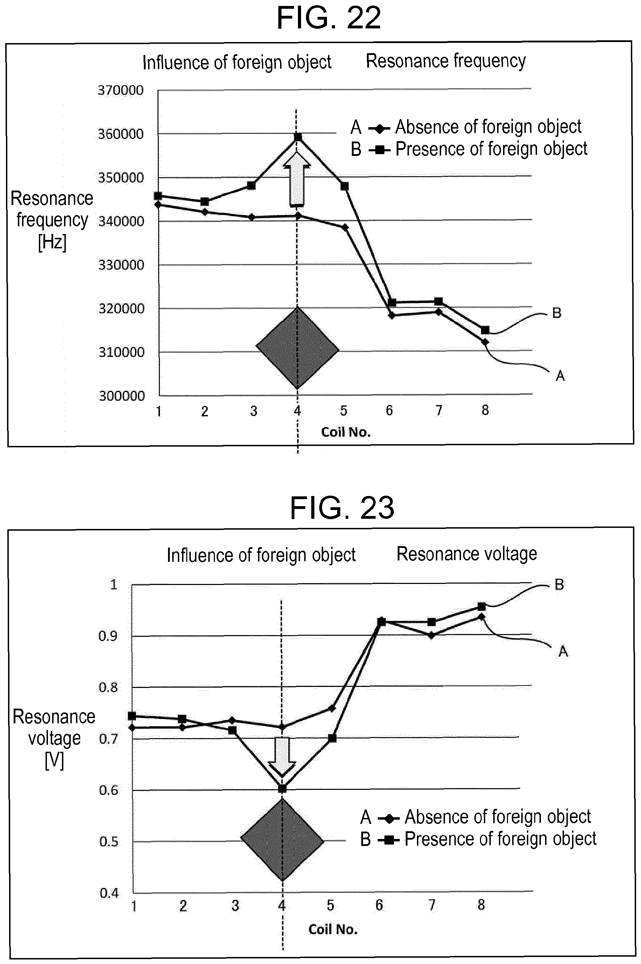

Line A of FIG. 22 indicates resonance frequencies of respective foreign object detection coils 55 in a case where a metal foreign object is absent when charging coil 8 is present at coordinates (10,0).

Line B of FIG. 22 indicates resonance frequencies of respective foreign object detection coils 55 in a case where a metal foreign object is present near fourth foreign object detection coil 55 when charging coil 8 is present at coordinates (10,0), and indicates a situation in which a resonance frequency of foreign object detection coil 55 (L4) near charging coil 8 is heightened.

Line A of FIG. 23 indicates resonance voltages of respective foreign object detection coils 55 in a case where a metal foreign object is absent when charging coil 8 is present at coordinates (10,0).

Line B of FIG. 23 indicates resonance voltages of respective foreign object detection coils 55 in a case where a metal foreign object is present at fourth foreign object detection coil 55 when charging coil 8 is present at coordinates (10,0), and indicates a situation in which a resonance voltage of foreign object detection coil 55 (L4) near charging coil 8 is lowered.

In other words, it has been found that a resonance frequency of foreign object detection coil 55 near the metal foreign object is heightened, and, conversely, a resonance voltage of foreign object detection coil 55 near the metal foreign object is lowered.

In the present exemplary embodiment, a metal foreign object is detected by foreign object detection coils 55 during non-conduction of charging coil 8 (before conduction of charging coil 8) on the basis of such a phenomenon.

Specifically, memory 47 stores a reference resonance frequency and a reference resonance voltage of each foreign object detection coil 55 for each location where charging coil 8 is present.

In this state, first, controller 10 detects a location where charging coil 8 is present by using position detection coil 14 (an example of a charging coil position detector), or switches 41 and 42 detecting that charging coil 8 has returned to the corner (coordinates xo and yo) illustrated in FIG. 7.

In other words, a metal foreign object is intended to be detected by foreign object detection coils 55 in a state of not being influenced by charging coil 8 during non-conduction of charging coil 8 (before conduction of charging coil 8).

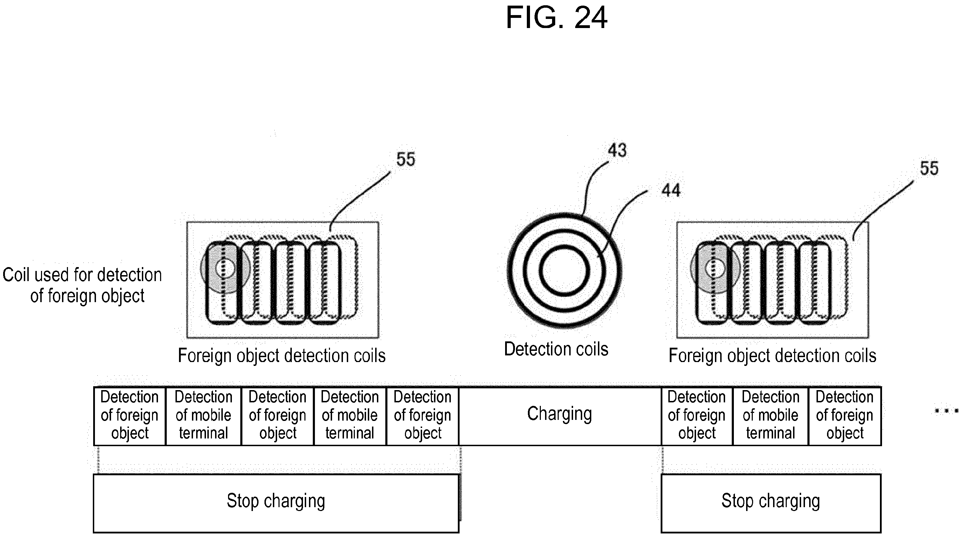

In the present exemplary embodiment, as illustrated in FIG. 24, in a state in which power switch 40 is turned on, during non-conduction of charging coil 8, foreign object detection performed by foreign object detection coils 55 and position detection of charging coil 8 performed by position detection coils 14 and switches 41 and 42 are alternately repeatedly performed.

As illustrated in FIGS. 22 and 23, for example, if resonance frequencies detected by eight foreign object detection coils 55 are higher than the resonance frequencies stored in memory 47 in advance by a predetermined value or more, or resonance voltages detected by eight foreign object detection coils 55 are lower than the resonance voltages stored in memory 47 in advance by a predetermined value or more through the operation, the presence of a foreign object is recognized, and a safety operation is performed (steps S3 and S4 in FIG. 19).

The safety operation during non-conduction of charging coil 8 is performed by alarm 51. And, there may be a configuration in which, if the metal foreign object is not removed thereafter, conduction of charging coil 8 cannot be performed.

Next, in a case where mobile terminal 15 is placed at any position of the mobile terminal placement portion which is the upper surface of support plate 6 as illustrated in FIG. 3, position detection coil 14 detects a location where mobile terminal 15 is placed (step S5 in FIG. 19). Next, driver 9 moves charging coil 8 to the location (step S6 in FIG. 19). Next, conduction of charging coil 8 is performed (step S7 in FIG. 19), and a foreign object detection operation is performed by large diameter detection coil 43 and small diameter detection coil 44 provided on the upper surface side of charging coil 8 (terminal charging coil 15a side) (step S8 in FIG. 19).

If a metal foreign object is detected during charging, controller 10 issues a warning with alarm 51 and stops charging using charging coil 8 as a safety operation (step S9 in FIG. 19).

Next mobile terminal 15 may be subsequently placed on the upper surface of support plate 6 in a state in which charging is finished (step S10 in FIG. 19). Therefore, controller 10 stores a position of charging coil 8 in memory 47 (step S11 in FIG. 19), and finishes charging (step S12 in FIG. 19).

In other words, since a current does not flow to charging coil 8 in this state, in a charging stop state after the charging as illustrated in FIG. 24, foreign object detection performed by foreign object detection coils 55 and position detection of charging coil 8 performed by position detection coils 14 and switches 41 and 42 are alternately repeatedly performed.

As is clear from the above description, since it is important that a position of charging coil 8 be specified at this time in order to detect a foreign object, controller 10 stores the position of charging coil 8 in memory 47 (step S11 in FIG. 19) and finishes charging (step S12 in FIG. 19).

In other words, since resonance frequencies or resonance voltages of eight foreign object detection coils 55 are influenced by a position of charging coil 8, information corresponding to the position of charging coil 8 is read from memory 47, and appropriate foreign object detection is performed on the basis of the read information.

Next, other features of the present exemplary embodiment will be described.

In the present exemplary embodiment, as described above, a state before conduction of charging coil 8, controller 10 alternately repeatedly performs foreign object detection in foreign object detection coils 55 and position detection of charging coil 8 (at which location mobile terminal 15 is placed on the upper surface of support plate 6) in position detection coils 14 and switches 41 and 42.

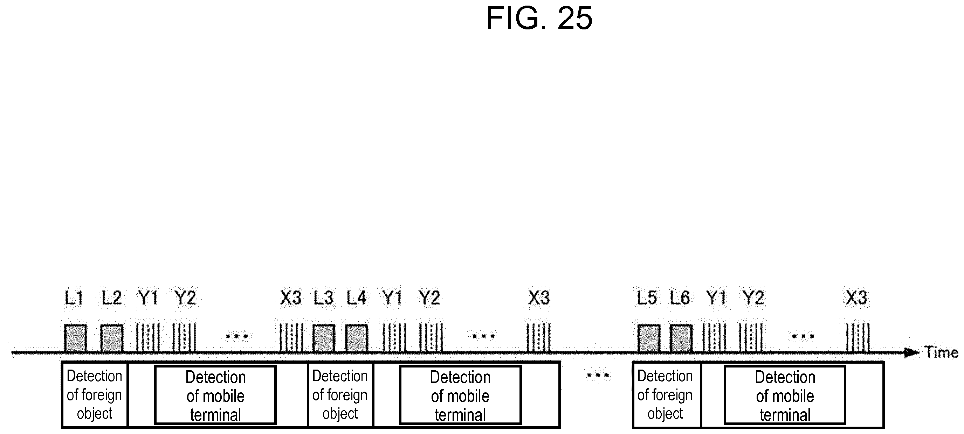

As an example of the features, there is a configuration in which, regarding driving of position detection coils 14, as understood from FIG. 25, an operation of detecting a foreign object by driving some of the plurality of foreign object detection coils 55 (L1, L2, L3, L4, L5, L6, L7, and L8) and an operation of detecting a location where charging coil 8 is present by driving the plurality of position detection coils 14 (Y1 to X3) are alternately performed.

Specifically, an operation is performed in which the foreign object detection coils 55 are subjected to division driving (L1 and L2 are driven), and thus it is detected whether or not there is a foreign object on the front surface side (upper surface side) of the front surface plate 11 during non-conduction of charging coil 8 (before conduction of charging coil 8), and then a plurality of position detection coils 14 (Y1 to Y6,..., and X1 to X3) are driven to detect a location where charging coil 8 is present.

Next, an operation is performed in which the foreign object detection coils 55 are subjected to division driving (L3 and L4 are driven), and thus it is detected whether or not there is a foreign object on the front surface side (upper surface side) of the front surface plate 11 during non-conduction of charging coil 8 (before conduction of charging coil 8), and then the plurality of position detection coils 14 (Y1 to Y6,..., and X1 to X3) are driven to detect a location where charging coil 8 is present.

Next, an operation is performed in which the foreign object detection coils 55 are subjected to division driving (L5 and L6 are driven), and thus it is detected whether or not there is a foreign object on the front surface side (upper surface side) of the front surface plate 11 during non-conduction of charging coil 8 (before conduction of charging coil 8), and then the plurality of position detection coils 14 (Y1 to Y6,..., and X1 to X3) are driven to detect a location where charging coil 8 is present.

Next, an operation is performed in which the foreign object detection coils 55 are subjected to division driving (L7 and L8 are driven), and thus it is detected whether or not there is a foreign object on the front surface side (upper surface side) of the front surface plate 11 during non-conduction of charging coil 8 (before conduction of charging coil 8), and then the plurality of position detection coils 14 (Y1 to Y6,..., and X1 to X3) are driven to detect a location where charging coil 8 is present.

These operations are repeatedly performed until mobile terminal 15 is placed on the upper surface of support plate 6.

Here, if mobile terminal 15 is placed on the upper surface of support plate 6, a position of mobile terminal 15 is detected by the plurality of position detection coils 14 (Y1 to Y6,..., and X1 to X3) at that time, charging coil 8 is moved to a position opposing the position of the mobile terminal, and thus charging is started.

After the charging is started, foreign object detection on the upper surface of support plate 6 is performed by large diameter detection coil 43 and small diameter detection coil 44 provided on the upper surface side of charging coil 8 (terminal charging coil 15a side) as described above (step S8 in FIG. 19).

In the present embodiment, as mentioned above, foreign object detection before conduction of charging coil 8 can be simply performed so that a foreign object is detected by driving some of the plurality of foreign object detection coils 55, and, accordingly, it is possible to reduce time required to detect a foreign object before starting conduction. As a result, it is also possible to reduce time required to start charging using the charging coil, and thus the mobile terminal charging device is convenient to use.

In other words, in the present embodiment, after conduction of charging coil 8, a foreign object can be detected by large diameter detection coil 43 and small diameter detection coil 44 provided in charging coil 8. On the other hand, before conduction for charging, a foreign object can be simply detected by driving some of the plurality of foreign object detection coils 55. Thus, it is possible to reduce time required to detect a foreign object before starting of conduction, and, accordingly, it is also possible to reduce time required to start charging of charging coil 8. As a result, convenience is improved.

When this is described a little more, in foreign object detection using foreign object detection coils 55, detection is performed on the basis of a resonance frequency or a resonance voltage, this detection is required to be determined after a plurality of waveforms are detected, and thus time for the detection is increased.

In contrast, in the operation of detecting a location where charging coil 8 is present by driving a plurality of position detection coils 14 (Y1 to Y6,..., and X1 to X3), determination can be performed on the basis of information regarding a single pulse, and thus time for detection can be reduced.

Even in a simple type operation of detecting a foreign object by driving some of the plurality of foreign object detection coils 55, front surface plate 11 (an example of a mobile terminal placement portion) is not so large, and thus a foreign object can be frequently detected unless a distance from currently driven foreign object detection coils 55 (for example, L3 and L4) to the foreign object is long. Therefore, there is a high probability that a foreign object may be detected even in this simple foreign object detection.

### INDUSTRIAL APPLICABILITY

As mentioned above, the mobile terminal charging device of the present invention is convenient to use, and can reliably detect a foreign object and thus has high safety. Therefore, the mobile terminal charging device is expected as an on-vehicle charging device or a household charging device.

### REFERENCE MARKS IN THE DRAWINGS

- 1: vehicle
- 2: passenger compartment
- 3: steering wheel
- 4: electronic apparatus
- 5: mobile terminal charging device
- 6: support plate
- 7: main body case
- 8: charging coil
- 9: driver
- 10: controller
- 11: front surface plate
- 12: intermediate plate
- 13: rear surface plate
- 14: position detection coil
- 15: mobile terminal
- 15a: terminal charging coil
- 16: holding member
- 17: support leg
- 18: support plate
- 19: control board
- 20: lower plate
- 21: support member
- 22: X-axis direction driving shaft
- 23: Y-axis direction driving shaft
- 24: penetration hole
- 25: worm wheel
- 26: gear
- 27: worm
- 28: motor
- 29: gear plate
- 30: worm wheel
- 31: gear
- 32: worm
- 33: motor
- 34: gear plate
- 35: flexible wiring
- 36: X-axis motor controller
- 37: Y-axis motor controller
- 38: charging coil controller
- 39: position detection coil controller
- 40: power switch
- 41: switch
- 42: switch
- 43: detection coil
- 44: detection coil
- 45: voltage detector
- 46: voltage detector
- 47: memory
- 48: magnetic body
- 49: magnetic body
- 50: metal foreign object
- 51: alarm
- 52: metal foreign object
- 53: guard portion
- 54: detection coil
- 55: foreign object detection coil

## Claims

1. A mobile terminal charging device (5) comprising:
a support plate (6) whose front surface side is usable as a mobile terminal placement portion;
a charging coil (8) that is disposed to be movable in a state of opposing the support plate (6) on a rear surface side of the support plate (6);
a driver (9) that can move the charging coil (8) on the rear surface side of the support plate (6);
a controller (10) that is connected to the charging coil (8) and the driver (9);
a memory (47) that is connected to the controller (10); and
a plurality of foreign object detection coils (55) and a plurality of position detection coils (14) that are provided on the support plate (6) and are connected to the controller (10),
wherein the charging coil (8) is provided with a first detection coil, and a second detection coil disposed inward of the first detection coil and having a smaller diameter than a diameter of the first detection coil,
wherein the first and second detection coils are connected to the controller (10),
wherein the memory (47) is configured to store a reference resonance frequency or a reference resonance voltage of each of the plurality of foreign object detection coils (55) for each location where the charging coil (8) is present, wherein
the controller (10) is configured to:
alternately perform an operation of detecting a foreign object by driving some of the plurality of foreign object detection coils (55) and then an operation of detecting a location where the charging coil (8) is present by driving the plurality of position detection coils (14), in a state before energization of the charging coil (8),
perform a safety operation when the plurality of foreign object detection coils (55) detect a foreign object in a case where a resonance frequency detected by one of the plurality of foreign object detection coils (55) corresponding to a location where the charging coil (8) is present is higher than the reference resonance frequency stored in the memory (47), or a resonance voltage detected by one of the plurality of foreign object detection coils (55) corresponding to a location where the charging coil (8) is present is lower than the reference resonance voltage stored in the memory (47), and
cause the charging coil (8) to be energized in a case where a location where the charging coil (8) is present is detected by the plurality of position detection coils (14), and perform another safety operation if a ratio (V2/V1) of a second voltage (V2) detected by the second detection coil to a first voltage (V1) detected by the first detection coil is less than a set value after the charging coil (8) is energized, and
wherein, the plurality of foreign object detection coils (55) are driven for multiple times, and the controller (10) is configured to drive some other of the foreign object detection coils (55) than the some of the foreign object detection coils (55) driven previously.

2. The mobile terminal charging device (5) of claim 1, wherein two or more of the plurality of foreign object detection coils (55) are provided on the front surface of the support plate (6), and other two or more of the plurality of foreign object detection coils (55) are provided on the rear surface of the support plate (6).

3. The mobile terminal charging device (5) of claim 1, further comprising:
an alarm (51) that is connected to the controller (10),
wherein the controller (10) is configured to cause the alarm (51) to issue a warning as the safety operation.

4. The mobile terminal charging device (5) of claim 1,
wherein the charging coil (8) has a ring shape formed by winding a wiring material in a spiral shape, and the first and second detection coils are disposed on a surface of the charging coil (8) opposing the support plate (6).

5. The mobile terminal charging device (5) of claim 1,
wherein an outer diameter of the first detection coil is substantially the same as an outer diameter of the charging coil (8), and an outer diameter of the second detection coil is substantially the same as an inner diameter of the charging coil (8).

6. The mobile terminal charging device (5) of claim 1, further comprising:
a third detection coil that is disposed between the first detection coil and the second detection coil.

7. The mobile terminal charging device (5) of claim 1,
wherein the controller (10) is configured to block conduction of the charging coil (8) as the safety operation if the ratio (V2/V1) of the second voltage (V2) to the first voltage (V1) is less than the set value.

8. The mobile terminal charging device (5) of claim 1, further comprising:
an alarm (51) that is connected to the controller (10),
wherein the controller (10) is configured to cause the alarm (51) connected to the controller (10) to operate as the safety operation if the ratio (V2/V1) of the second voltage (V2) to the first voltage (V1) is less than the set value.

9. The mobile terminal charging device (5) of claim 1, further comprising:
a voltage detector (45, 46) that is connected to the controller (10) and is also connected to the first and second detection coils, and configured to measure peak voltages.

10. The mobile terminal charging device (5) of claim 1,
wherein the controller (10) is configured to record a location where the charging coil (8) is present, in the memory (47), after charging using the charging coil (8) is performed.

11. A vehicle (1) comprising:
a passenger compartment (2); and
the mobile terminal charging device (5) of any one of claims 1 to 10, disposed in the passenger compartment (2) so that the mobile terminal placement portion faces upward.

12. The vehicle (1) of claim 11, further comprising:
a guard portion (53) that protrudes upward from the support plate (6) and is provided at an outer periphery of the support plate (6).

## Patentansprüche

1. Mobilendgerätladevorrichtung (5), umfassend:
eine Tragplatte (6), deren Vorderflächenseite als ein Mobilendgerätanordnungsabschnitt verwendbar ist;
eine Ladespule (8), die derart angeordnet ist, dass sie in einem Zustand gegenüberliegend der Tragplatte (6) auf einer Rückflächenseite der Tragplatte (6) beweglich ist;
eine Antriebsvorrichtung (9), welche die Ladespule (8) auf der Rückflächenseite der Tragplatte (6) bewegen kann;
eine Steuerung (10), die mit der Ladespule (8) und der Antriebsvorrichtung (9) verbunden ist;
einen Speicher (47), der mit der Steuerung (10) verbunden ist; und
mehrere Fremdkörperdetektionsspulen (55) und mehrere Positionsdetektionsspulen (14), die auf der Tragplatte (6) vorgesehen und mit der Steuerung (10) verbunden sind,
wobei die Ladespule (8) mit einer ersten Detektionsspule und einer zweiten Detektionsspule, die einwärts der ersten Detektionsspule angeordnet ist und einen kleineren Durchmesser aufweist als ein Durchmesser der ersten Detektionsspule, versehen ist,
wobei die ersten und zweiten Detektionsspulen mit der Steuerung (10) verbunden sind,
wobei der Speicher (47) konfiguriert ist, eine Referenzresonanzfrequenz oder eine Referenzresonanzspannung von jeder der mehreren Fremdkörperdetektionsspulen (55) für jeden Ort, an dem sich die Ladespule (8) befindet, zu speichern,
wobei die Steuerung (10) konfiguriert ist zum:
wechselweisen Ausführen eines Detektiervorgangs eines Fremdobjekts durch Ansteuern von einigen der mehreren Fremdkörperdetektionsspulen (55) und dann eines Detektiervorgangs eines Ortes, an dem sich die Ladespule (8) befindet, durch Ansteuern der mehreren Positionsdetektionsspulen (14) in einem Zustand vor dem Einschalten der Ladespule (8),
Ausführen einer Sicherheitsoperation, wenn die mehreren Fremdkörperdetektionsspulen (55) ein Fremdobjekt detektieren, wenn eine Resonanzfrequenz, die durch eine der mehreren Fremdkörperdetektionsspulen (55) detektiert wird und einem Ort entspricht, an dem sich die Ladespule (8) befindet, höher ist als die Referenzresonanzfrequenz, die in dem Speicher (47) gespeichert ist, oder eine Resonanzspannung, die durch eine der mehreren Fremdkörperdetektionsspulen (55) detektiert wird, einem Ort entspricht, an dem sich die Ladespule (8) befindet, niedriger ist als die Referenzresonanzspannung, die in dem Speicher (47) gespeichert ist, und
Bewirken, dass die Ladespule (8) eingeschaltet wird, wenn ein Ort, an dem sich die Ladespule (8) befindet, durch die mehreren Positionsdetektionsspulen (14) detektiert wird, und Ausführen einer weiteren Sicherheitsoperation, wenn ein Verhältnis (V2/V1) einer zweiten Spannung (V2), die durch die zweite Detektionsspule detektiert wird, zu einer ersten Spannung (V1), die durch die erste Detektionsspule detektiert wird, nachdem die Ladespule (8) eingeschaltet ist, kleiner ist als ein Sollwert, und
wobei die mehreren Fremdkörperdetektionsspulen (55) mehrere Male angesteuert werden und die Steuerung (10) konfiguriert ist, einige andere der Fremdkörperdetektionsspulen (55) als einige der Fremdkörperdetektionsspulen (55), die zuvor angesteuert wurden, anzusteuern.

2. Mobilendgerätladevorrichtung (5) nach Anspruch 1, wobei zwei oder mehr der mehreren Fremdkörperdetektionsspulen (55) auf der Vorderfläche der Tragplatte (6) vorgesehen sind und andere zwei oder mehr der mehreren Fremdkörperdetektionsspulen (55) auf der Rückfläche der Tragplatte (6) vorgesehen sind.

3. Mobilendgerätladevorrichtung (5) nach Anspruch 1, ferner umfassend:
einen Alarm (51), der mit der Steuerung (10) verbunden ist,
wobei die Steuerung (10) konfiguriert ist, zu bewirken, dass der Alarm (51), eine Warnung als die Sicherheitsoperation ausgibt.

4. Mobilendgerätladevorrichtung (5) nach Anspruch 1,
wobei die Ladespule (8) eine Ringform aufweist, die durch Wickeln eines Leitungsmaterials in einer spiralförmigen Form gebildet ist, und die ersten und zweiten Detektionsspulen auf einer Fläche der Ladespule (8) gegenüberliegend der Tragplatte (6) angeordnet sind.

5. Mobilendgerätladevorrichtung (5) nach Anspruch 1,
wobei ein Außendurchmesser der ersten Detektionsspule im Wesentlichen der gleiche ist wie ein Außendurchmesser der Ladespule (8) und ein Außendurchmesser der zweiten Detektionsspule im Wesentlichen der gleiche ist wie ein Innendurchmesser der Ladespule (8).

6. Mobilendgerätladevorrichtung (5) nach Anspruch 1, ferner umfassend:
eine dritte Detektionsspule, die zwischen der ersten Detektionsspule und der zweiten Detektionsspule angeordnet ist.

7. Mobilendgerätladevorrichtung (5) nach Anspruch 1,
wobei die Steuerung (10) konfiguriert ist, das Leiten der Ladespule (8) als die Sicherheitsoperation zu blockieren, wenn das Verhältnis (V2/V1) der zweiten Spannung (V2) zur ersten Spannung (V1) kleiner ist als der Sollwert.

8. Mobilendgerätladevorrichtung (5) nach Anspruch 1, ferner umfassend:
einen Alarm (51), der mit der Steuerung (10) verbunden ist,
wobei die Steuerung (10) konfiguriert ist, zu bewirken, dass der mit der Steuerung (10) verbundene Alarm (51) als die Sicherheitsoperation arbeitet, wenn das Verhältnis (V2/V1) der zweiten Spannung (V2) zur ersten Spannung (V1) kleiner als der Sollwert ist.

9. Mobilendgerätladevorrichtung (5) nach Anspruch 1, ferner umfassend:
einen Spannungsdetektor (45, 46), der mit der Steuerung (10) verbunden und auch mit den ersten und zweiten Detektionsspulen verbunden und konfiguriert ist, Spitzenspannungen zu messen.

10. Mobilendgerätladevorrichtung (5) nach Anspruch 1,
wobei die Steuerung (10) konfiguriert ist, einen Ort, an dem sich die Ladespule (8) befindet, in dem Speicher (47) zu speichern, nachdem das Laden unter Verwendung der Ladespule (8) ausgeführt wurde.

11. Fahrzeug (1), umfassend:
einen Fahrzeuginnenraum (2); und
die Mobilendgerätladevorrichtung (5) nach einem der Ansprüche 1 bis 10, die in dem Fahrzeuginnenraum (2) angeordnet ist, sodass der Mobilendgerätanordnungsabschnitt nach oben zeigt.

12. Fahrzeug (1) nach Anspruch 11, ferner umfassend:
einen Schutzeinrichtungsabschnitt (53), der von der Tragplatte (6) nach oben vorsteht und an einem Außenumfang der Tragplatte (6) vorgesehen ist.

## Revendications

1. Dispositif de charge de terminal mobile (5) comprenant :
une plaque de support (6) dont le côté de surface avant peut être utilisé en tant que partie de placement de terminal mobile ;
une bobine de charge (8) qui est disposée pour pouvoir être déplacée dans un état où elle est opposée à la plaque de support (6) sur un côté de surface arrière de la plaque de support (6) ;
un pilote (9) qui peut déplacer la bobine de charge (8) sur le côté de surface arrière de la plaque de support (6) ;
un dispositif de commande (10) qui est relié à la bobine de charge (8) et au pilote (9) ;
une mémoire (47) qui est reliée au dispositif de commande (10) ; et
une pluralité de bobines de détection d'objet étranger (55) et une pluralité de bobines de détection de position (14) qui sont disposées sur la plaque de support (6) et sont reliées au dispositif de commande (10),
la bobine de charge (8) étant dotée d'une première bobine de détection et d'une deuxième bobine de détection disposée à l'intérieur de la première bobine de détection et présentant un diamètre inférieur à un diamètre de la première bobine de détection,
les première et deuxième bobines de détection étant reliées au dispositif de commande (10),
la mémoire (47) étant conçue pour stocker une fréquence de résonance de référence ou une tension de résonance de référence de chacune de la pluralité de bobines de détection d'objet étranger (55) pour chaque emplacement où la bobine de charge (8) est présente,
le dispositif de commande (10) étant conçu pour :
effectuer en alternance une opération de détection d'un objet étranger par l'entraînement d'une partie de la pluralité de bobines de détection d'objet étranger (55) et puis une opération de détection d'un emplacement où la bobine de charge (8) est présente par l'entraînement de la pluralité de bobines de détection de position (14), dans un état avant l'excitation de la bobine de charge (8),
effectuer une opération de sécurité lorsque la pluralité de bobines de détection d'objet étranger (55) détecte un objet étranger au cas où une fréquence de résonance détectée par une de la pluralité de bobines de détection d'objet étranger (55) correspondant à un emplacement où la bobine de charge (8) est présente est supérieure à la fréquence de résonance de référence stockée dans la mémoire (47), ou une tension de résonance détectée par une de la pluralité de bobines de détection d'objet étranger (55) correspondant à un emplacement où la bobine de charge (8) est présente est inférieure à la tension de résonance de référence stockée dans la mémoire (47), et
amener la bobine de charge (8) à être excitée au cas où un emplacement où la bobine de charge (8) est présente est détectée par la pluralité de bobines de détection de position (14), et effectuer une autre opération de sécurité si un rapport (V2/V1) d'une deuxième tension (V2) détectée par la deuxième bobine de détection sur une première tension (V1) détectée par la première bobine de détection est inférieur à une valeur de consigne après que la bobine de charge (8) a été excitée, et
la pluralité de bobines de détection d'objet étranger (55) étant entraînée de multiples fois, et le dispositif de commande (10) étant conçu pour entraîner une autre partie des bobines de détection d'objet étranger (55) que la partie des bobines de détection d'objet étranger (55) entraînée précédemment.

2. Dispositif de charge de terminal mobile (5) selon la revendication 1,
dans lequel au moins deux de la pluralité de bobines de détection d'objet étranger (55) sont disposées sur la surface avant de la plaque de support (6) et les au moins deux autres de la pluralité de bobines de détection d'objet étranger (55) sont disposées sur la surface arrière de la plaque de support (6).

3. Dispositif de charge de terminal mobile (5) selon la revendication 1, comprenant en outre :
une alarme (51) qui est reliée au dispositif de commande (10),
dans lequel le dispositif de commande (10) est conçu pour amener l'alarme (51) à émettre un avertissement comme opération de sécurité.

4. Dispositif de charge de terminal mobile (5) selon la revendication 1,
dans lequel la bobine de charge (8) présente une forme annulaire formée par l'enroulement d'un matériau d'enroulement en forme de spirale, et les première et deuxième bobines de détection sont disposées sur une surface de la bobine de charge (8) en face de la plaque de support (6).

5. Dispositif de charge de terminal mobile (5) selon la revendication 1,
dans lequel un diamètre externe de la première bobine de détection est sensiblement le même qu'un diamètre externe de la bobine de charge (8), et un diamètre externe de la deuxième bobine de détection est sensiblement le même qu'un diamètre interne de la bobine de charge (8).

6. Dispositif de charge de terminal mobile (5) selon la revendication 1, comprenant en outre :
une troisième bobine de détection qui est disposée entre la première bobine de détection et la deuxième bobine de détection.

7. Dispositif de charge de terminal mobile (5) selon la revendication 1,
dans lequel le dispositif de commande (10) est conçu pour bloquer la conduction de la bobine de charge (8) en tant qu'opération de sécurité si le rapport (V2/V1) de la deuxième tension (V2) sur la première tension (V1) est inférieur à la valeur de consigne.

8. Dispositif de charge de terminal mobile (5) selon la revendication 1, comprenant en outre :
une alarme (51) qui est reliée au dispositif de commande (10),
le dispositif de commande (10) étant conçu pour amener l'alarme (51) reliée au dispositif de commande (10) à fonctionner en tant qu'opération de sécurité si le rapport (V2/V1) de la deuxième tension (V2) sur la première tension (V1) est inférieur à la valeur de consigne.

9. Dispositif de charge de terminal mobile (5) selon la revendication 1, comprenant en outre :
un détecteur de tension (45, 46) qui est relié au dispositif de commande (10) et est aussi relié aux première et deuxième bobines de détection, et conçu pour mesurer des pics de tension.

10. Dispositif de charge de terminal mobile (5) selon la revendication 1,
dans lequel le dispositif de commande (10) est conçu pour enregistrer un emplacement où la bobine de charge (8) est présente, dans la mémoire (47), après que la charge à l'aide de la bobine de charge (8) est effectuée.

11. Véhicule (1) comprenant :
un compartiment de passager (2) ; et
le dispositif de charge de terminal mobile (5) selon l'une quelconque des revendications 1 à 10, disposé dans le compartiment passager (2) de manière que la partie de placement de terminal mobile est orientée vers le haut.

12. Véhicule (1) selon la revendication 11, comprenant en outre :
une partie de protection (53) qui fait saillie vers le haut depuis la plaque de support (6) et est disposée au niveau d'une périphérie externe de la plaque de support (6).
